(19) Europäisches Patentamt
European Patent Office
Office européen des brevets

(11) **EP 4 727 062 A1**

(12) **EUROPÄISCHE PATENTANMELDUNG**

(43) Veröffentlichungstag:
**15.04.2026  Patentblatt 2026/16**

(21) Anmeldenummer: **24206154.7**

(22) Anmeldetag: **11.10.2024**

(51) Internationale Patentklassifikation (IPC):
*H04L 9/40* (2022.01)    *H04L 9/32* (2006.01)

(52) Gemeinsame Patentklassifikation (CPC):
**H04L 63/0823; H04L 9/3213; H04L 9/3268;
H04L 63/0807**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(71) Anmelder: **Siemens Aktiengesellschaft
80333 München (DE)**

(72) Erfinder: **Falk, Rainer
85435 Erding (DE)**

(74) Vertreter: **Siemens Patent Attorneys
Postfach 22 16 34
80506 München (DE)**

(54) **VERFAHREN ZUM VERIFIZIEREN DER GÜLTIGKEIT VON CREDENTIALS**

(57)    Die vorliegende Erfindung betrifft ein Verfahren und ein System (1) zum Verifizieren der Gültigkeit von Credentials (C), die unter Verwendung eines Einrichtungsschutz-Credentials (EC) in einem Einrichtungsvorgang auf einem Gerät (2) eingerichtet sind, wobei während der Gültigkeitsdauer des jeweiligen Creditials (C) geprüft wird, ob das bei dem Einrichtungsvorgang des jeweiligen Credentials (C) zu dessen Schutz verwendete zugehörige Einrichtungsschutz-Credential (EC) noch gültig ist.

EP 4 727 062 A1

FIG 1

**Beschreibung**

Die Erfindung betrifft Verfahren und ein System zum Verifizieren der Gültigkeit von Credentials, die unter Verwendung eines Einrichtungsschutz-Credentials auf einem Gerät eingerichtet sind.

Industrielle Geräte können Credentials zur Authentisierung, insbesondere digitale Zertifikate (z.B. DevID, device identifier) oder verifizierbare Credentials, verwenden. Dabei benötigt ein Gerät häufig eine Mehrzahl oder Vielzahl von Credentials. Credentials können anwendungsspezifisch eingerichtet sein (z.B. applikationsspezifische LDevIDs). Einzelne Applikationen können spezifische Zertifikatsformate definieren (z.B. für TSN-Kommunikation, OPC UA, IEC61850) oder sie können unterschiedliche kryptographische Algorithmen (Cipher Suites) unterstützen.

Das Einrichten von Credentials kann automatisiert erfolgen. Dazu können Zertifikatsmanagementprotokolle, wie z.B. SCEP, EST, CMP, oder Gerätemanagementprotokolle, wie z.B. OPC UA, OMA DM, SNMP, NETCONF/YANG, RESTCONF/YANG oder spezielle Onboarding-Protokolle wie BRSKI oder SDO verwendet werden. Diese Protokolle benötigen initiale Credentials, um das Einrichten eines weiteren Credentials zu schützen (Ausnahme, wenn ein initiales Credential in einer geschützten Umgebung, z.B. bei der Produktion, eingerichtet wird, oder wenn ein Trust-on-First-Use-Ansatz verwendet wird).

Ein Credential kann jedoch ungültig werden, beispielsweise wenn es in unzulässiger Weise ausgestellt wurde, wenn ein Gerät außer Betrieb genommen wird oder für einen anderen Zweck eingerichtet wird, wenn ein privater/geheimer Schlüssel versehentlich offenbart wird, wenn bei einem Angriff Schlüssel erbeutet werden, oder wenn sich ein Attribut-Wert ändert (eher bei menschlichen Nutzern, z.B. Änderung einer Abteilungszugehörigkeit).

Dazu können bei digitalen Zertifikaten insbesondere eine Zertifikatswiderrufsliste (CRL, Certificate Revocation List) oder ein Zertifikatsstatusabfrageprotokoll (OCSP, Online Certificate Status Protocol) verwendet werden. Die Aussage zur Gültigkeit betrifft jedoch nur Zertifikate, die in der Zertifikatswiderrufsliste beziehungsweise in der OCSP-Antwortnachricht aufgeführt sind. Ein anderes Gerät, das das digitale Zertifikat des Geräts validiert, prüft dabei auch den Widerrufsstatus dieses Zertifikats. Die Validierung eines Zertifikats, das das Gerät für eine Authentisierung gegenüber dem anderen Gerät verwendet, erfolgt bei tatsächlicher Benutzung dieses Zertifikats, insbesondere bei Verwendung in einem Authentisierungs- und Schlüsselvereinbarungsprotokoll. Die Vertrauenswürdigkeit eines digitalen Zertifikats hängt jedoch weiterhin davon ab, ob dessen Einrichten hinreichend gut geschützt erfolgt ist.

Vor diesem Hintergrund liegt der vorliegenden Erfindung als Aufgabe zugrunde, die Gültigkeit eines auf einem Gerät eingerichteten Credentials auch in Hinblick auf das beim Einrichten des Credentials verwendete Einrichtungs-Credential zu überwachen.

Erfindungsgemäß wird diese Aufgabe durch ein Verfahren zum Verifizieren der Gültigkeit von Credentials mit den Merkmalen des Patentanspruchs 1 und/oder durch System zum Verifizieren der Gültigkeit von Credentials zum Verifizieren der Gültigkeit von Credentials mit den Merkmalen des Patentanspruches 17 gelöst.

Die vorliegende Erfindung schafft demnach ein Verfahren zum Verifizieren der Gültigkeit von Credentials, die unter Verwendung eines Einrichtungsschutz-Credentials in einem Einrichtungsvorgang auf einem Gerät eingerichtet sind, wobei während der Gültigkeitsdauer des jeweiligen Creditials geprüft wird, ob das bei dem Einrichtungsvorgang des jeweiligen Credentials zu dessen Schutz verwendete zugehörige Einrichtungsschutz-Credential noch gültig ist.

Die vorliegende Erfindung schafft ferner ein System zum Verifizieren der Gültigkeit von Credentials, die unter Verwendung eines Einrichtungsschutz-Credentials in einem Einrichtungsvorgang auf einem Gerät eingerichtet sind, wobei während der Gültigkeitsdauer des jeweiligen Creditials geprüft wird, ob das bei dem Einrichtungsvorgang des jeweiligen Credentials zu dessen Schutz verwendete zugehörige Einrichtungsschutz-Credential noch gültig ist.

Das System umfasst beispielsweise ein Automatisierungssystem mit einem oder mehreren industriellen Geräten zur Ansteuerung von Maschinen. Diese Geräte können über ein Netzwerk mit Servern verbunden sein, insbesondere mit einem Provisioning-Server und einen Widerrufs-Statusserver.

Ein Credential für ein Gerät des Systems umfasst Informationen, die zur Authentifizierung und/oder Autorisierung des Geräts gegenüber einem Netzwerk, dem System oder einer Plattform verwendet werden. Diese Informationen ermöglichen es dem Gerät, seine Identität nachzuweisen und gegebenenfalls Zugriffsrechte zu erhalten.

Die der vorliegenden Erfindung zugrundeliegende Idee besteht darin, zu überwachen, ob das bei einem Einrichtungsvorgang eines Credentials zu dessen Schutz verwendete zugehörige Einrichtungsschutz-Credential noch gültig ist. Das erfindungsgemäße Verfahren erhöht hierdurch die Sicherheit des Systems, insbesondere gegenüber Cyberangriffen.

Vorteilhafte Ausgestaltungen und Weiterbildungen ergeben sich aus den weiteren Unteransprüchen sowie aus der Beschreibung unter Bezugnahme auf die Figuren der Zeichnung.

Bei einer möglichen Ausführungsform des erfindungsgemäßen Verfahrens zum Verifizieren der Gültigkeit von Credentials wird bei dem Einrichtungsvorgang zum Einrichten eines Credentials eine Information hinsichtlich des dabei verwendeten Einrichtungsschutz-Credentials in einer Einrichtungsdatenbank des Gerätes oder eines Einrichtungsservers gespeichert und/oder in dem auf dem Gerät eingerichteten Credential als Attribut des eingerichteten Credentials gespeichert.

Bei einer möglichen Ausführungsform des erfindungsgemäßen Verfahrens zum Verifizieren der Gültigkeit von Credentials werden bei dem Einrichtungsvorgang zum Einrichten eines Credentials auf dem Gerät weitere Informationen hinsichtlich eines Einrichtungs-Zeitpunktes des Einrichtungsvorganges, des Ortes des Gerätes und/oder des dabei verwendeten Kommunikationsnetzwerkes gespeichert. Dies erleichtert die Bestimmung einer geeigneten Reaktion im Falle eines Widerrufs des Einrichtungsschutz-Credentials.

Bei einer möglichen Ausführungsform des erfindungsgemäßen Verfahrens zum Verifizieren der Gültigkeit von Credentials wird überwacht, ob das bei einem Einrichtungsvorgang zum Einrichten eines Credentials auf dem Gerät verwendete zugehörige Einrichtungsschutz-Credential durch einen Widerruf hinsichtlich des betreffenden Einrichtungsschutz-Credentials für ungültig erklärt worden ist. Hierdurch wird die Sicherheit gegenüber Cyber-Angriffen erhöht.

Bei einer möglichen Ausführungsform des erfindungsgemäßen Verfahrens zum Verifizieren der Gültigkeit von Credentials frägt das Gerät und/oder ein Einrichtungsserver Widerrufsinformation bei einem Widerrufs-Statusserver dahingehend ab, ob das bei einem Einrichtungsvorgang zum Einrichten eines Credentials auf dem Gerät verwendete zugehörige Einrichtungsschutz-Credential für ungültig erklärt worden ist. Alternativ kann dem Gerät auch der Widerruf eines Einrichtungsschutz-Credentials gemeldet werden.

Bei einer möglichen Ausführungsform des erfindungsgemäßen Verfahrens zum Verifizieren der Gültigkeit von Credentials umfassen die bei dem Widerrufs-Statusserver abgefragten Widerrufsinformationen hinsichtlich des Einrichtungsschutz-Credentials einen Widerrufszeitpunkt und/oder einen Widerrufsgrund. Hierdurch kann eine geeignete Reaktion bestimmt werden, sobald eine Einrichtungsschutz-Credentials widerrufen wird.

Bei einer möglichen Ausführungsform des erfindungsgemäßen Verfahrens zum Verifizieren der Gültigkeit von Credentials wird geprüft, ob der in den Widerrufsinformationen hinsichtlich des Einrichtungs-Credentials angegebene Widerrufs-Zeitpunkt hinter dem Einrichtungs-Zeitpunkt des betreffenden Einrichtungsschutz-Credentials liegt. Hierdurch kann eine Plausibilitätsprüfung erfolgen.

Bei einer möglichen Ausführungsform des erfindungsgemäßen Verfahrens zum Verifizieren der Gültigkeit von Credentials erfolgt in Abhängigkeit des in den Widerrufsinformationen des Einrichtungs-Credentials angegebenen Widerrufsgrundes und/oder des in den Widerrufsinformationen des Einrichtungs-Credentials angegebenen Widerrufs-Zeitpunktes eine geeignete bzw. eine hierfür vorgesehene Reaktion zur Behandlung des Widerrufes.

Bei einer möglichen Ausführungsform des erfindungsgemäßen Verfahrens zum Verifizieren der Gültigkeit von Credentials besteht die Reaktion zur Behandlung des Widerrufes darin, dass dasjenige Gerät, welches das unter Verwendung des in dem erhaltenen Widerruf für ungültig erklärten Einrichtungs-Credentials eingerichtete Credential aufweist, automatisch gesperrt wird.

Bei einer möglichen Ausführungsform des erfindungsgemäßen Verfahrens zum Verifizieren der Gültigkeit von Credentials besteht die Reaktion zur Behandlung des Widerrufes darin, dass das unter Verwendung des in dem erhaltenen Widerruf für ungültig erklärten Einrichtungs-Credentials eingerichtete Credential aktualisiert, gesperrt oder eine zu dem eingerichteten Credential zugeordnete Berechtigung aktualisiert wird.

Bei einer möglichen Ausführungsform des erfindungsgemäßen Verfahrens zum Verifizieren der Gültigkeit von Credentials besteht die Reaktion zur Behandlung des Widerrufes darin, dass für das unter Verwendung des in dem erhaltenen Widerruf für ungültig erklärten Einrichtungs-Credentials eingerichtete Credential eine Service-Aufgabe für einen Geräteaustausch generiert wird.

Bei einer möglichen Ausführungsform des erfindungsgemäßen Verfahrens zum Verifizieren der Gültigkeit von Credentials erfolgt das Prüfen der Gültigkeit des zu einem Credential zugehörigen Einrichtungsschutz-Credentials bei Benutzung des eingerichteten Credentials.

Bei einer möglichen Ausführungsform des erfindungsgemäßen Verfahrens zum Verifizieren der Gültigkeit von Credentials erfolgt das Prüfen der Gültigkeit des zu einem Credential zugehörigen Einrichtungsschutz-Credentials periodisch während der Gültigkeitsdauer des jeweiligen Creditials. Weiterhin kann das Prüfen der Gültigkeit des zu einem Credential zugehörigen Einrichtungsschutz-Credentials wiederholt während der Gültigkeitsdauer des jeweiligen Creditials erfolgen, z.B. zu randomisiert ermittelten Prüfzeitpunkten, oder automatisch abhängig von Ereignissen wie Hochlauf, Konfigurationsänderung, Selbsttest.

Bei einer möglichen Ausführungsform des erfindungsgemäßen Verfahrens zum Verifizieren der Gültigkeit von Credentials erfolgt das Prüfen Gültigkeit des zu einem Credential zugehörigen Einrichtungsschutz-Credentials auf eine von dem Gerät erhaltene Prüf-Anforderung hin.

Bei einer möglichen Ausführungsform des erfindungsgemäßen Verfahrens zum Verifizieren der Gültigkeit von Credentials weist das auf dem Gerät eingerichtete Credential und das zugehörige Einrichtungsschutz-Credential ein digitales Zertifikat, ein Authentisierungs-Token, einen kryptographischen Schlüssel der ein verifizierbares Credential auf.

Bei einer möglichen Ausführungsform des erfindungsgemäßen Verfahrens zum Verifizieren der Gültigkeit von Credentials weist das bei dem Einrichtungsvorgang zum Einrichten eines Credentials auf dem Gerät das zu dessen Schutz verwendete Einrichtungsschutz-Credential auf: ein Credential mit dem das Gerät sich authentisiert, ein Credential mit dem das Gerät einen Einrichtungs-Server oder einen Gerätemanagement-Server authentisiert, ein Credential mit dem das Gerät die Integrität und Authentizität eines von dem Gerät empfangenen Einrichtungs-Datensatzes prüft, oder ein Credential mit dem das Gerät den von dem Gerät empfangenen Einrichtungs-Datensatzes entschlüsselt.

Die Erfindung schafft ein System zum Verifizieren der Gültigkeit von Credentials, die unter Verwendung eines Einrichtungsschutz-Credentials in einem Einrichtungsvorgang auf einem Gerät eingerichtet sind, wobei während der Gültigkeitsdauer des jeweiligen Creditials geprüft wird, ob das bei dem Einrichtungsvorgang des jeweiligen Credentials zu dessen Schutz verwendete zugehörige Einrichtungsschutz-Credential noch gültig ist.

Bei einer möglichen Ausführungsform des erfindungsgemäßen Systems weist das Gerät ein industrielles IoT-Gerät ist, das einen Speicher zur Speicherung von Credentials für Sicherheitsfunktionen des Gerätes auf.

Bei einer möglichen Ausführungsform des erfindungsgemäßen Systems weist das Gerät eine drahtlose oder drahtgebundene Netzwerkschnittstelle zur Anbindung des Gerätes an einen Einrichtungsserver und/oder an einen Widerrufs-Statusserver über ein Kommunikationsnetzwerk des Systems auf.

Bei einer möglichen Ausführungsform des erfindungsgemäßen Systems weist das Gerät und/oder der Einrichtungsserver eine Einheit auf aufweist, die zur Ausführung eines Verfahrens gemäße dem ersten Aspekt der Erfindung ausgelegt ist.

Die vorliegende Erfindung wird nachfolgend anhand der in den schematischen Figuren der Zeichnungen angegebenen Ausführungsbeispiele näher erläutert.

Es zeigen dabei:

Fig. 1    ein Blockschaltbild zur Erläuterung der Funktionsweise einer möglichen Ausführungsform des erfindungsgemäßen Systems und des erfindungsgemäßen Verfahrens zum Verifizieren der Gültigkeit von Credentials;

Fig.2    ein Ablaufdiagramm zur Erläuterung der Funktionsweise des erfindungsgemäßen Systems und des erfindungsgemäßen Verfahrens zum Verifizieren der Gültigkeit von Credentials.

Die beiliegenden Figuren sollen ein weitergehendes Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren sind gleiche, funktionsgleiche und gleich wirkende Elemente, Merkmale und Komponenten - sofern nichts Anderes ausgeführt ist - jeweils mit denselben Bezugszeichen versehen.

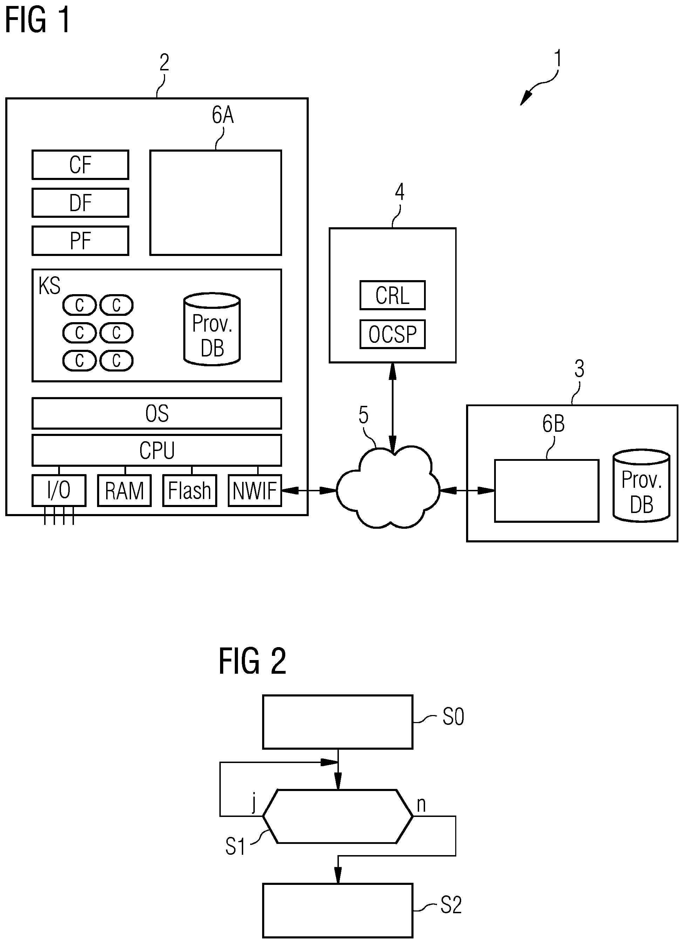

Die vorliegende Erfindung schafft ein Verfahren und System 1 zum Verifizieren der Gültigkeit von Credentials C, die unter Verwendung eines Einrichtungsschutz-Credentials EC in einem Einrichtungsvorgang auf einem Gerät 2 eingerichtet sind, wobei während der Gültigkeitsdauer des jeweiligen Creditials C geprüft wird, ob das bei dem Einrichtungsvorgang des jeweiligen Credentials C zu dessen Schutz verwendete zugehörige Einrichtungsschutz-Credential EC noch gültig ist. Fig.1 zeigt schematisch eine mögliche Ausführungsform eines System 1 zum Verifizieren der Gültigkeit von Credentials C mit mindestens einem Gerät 2.

Bei einer möglichen Ausführungsform umfasst ein Credential einen Identifikator (z.B. Geräte-ID oder MAC-Adresse oder UUID) zur Referenzierung des Gerätes, Authentifizierungsdaten sowie Metadaten. Die Metadaten eines Credentials C sind im Wesentlichen dessen Ablaufdatum und dessen Gültigkeitsbereich. Das Ablaufdatum gibt an, wann das Credential ungültig wird. Der Gültigkeitsbereich (Scope) kann Beschränkungen des Credentials C angeben, d.h. wo und wie das jeweilige Credential C verwendet werden darf, z. B. nur für bestimmte Funktionen, Dienste oder Netzwerke. Das System 1 kann auch eine graphische Nutzerschnittstelle GUI aufweisen.

Bei einer möglichen Ausführungsform wird zunächst beim Einrichten eines Credentials C auf dem Gerät 2 des Systems 1 zu einem Einrichtungszeitpunkt t0 geprüft, ob das dabei verwendete Einrichtungsschutz-Credential EC gültig ist. Ein Einrichtungsschutz-Credential EC kann insbesondere ein Client-Authentisierungs-Credential (Geräte-Authentisierungstoken-Credential) sein und/oder ein Einrichtungs-Server-Authentisierungs-Credential. Es wird bei dem erfindungsgemäßen Verfahren zudem während der Gültigkeitsdauer des eingerichteten Credentials C überwacht, ob das beim Einrichtungsschutz-Credential EC noch gültig ist.

Bei einer möglichen Ausführungsform wird eine Information zu zumindest einem Einrichtungsschutz-Credential EC abgespeichert, das zum Schutz des Einrichtens eines Credentials C auf einem Gerät 2 verwendet wird. Weiterhin kann bei der Durchführung des Einrichtens eine Information zum Einrichtungszeitpunkt t0 und/oder zum Ort des Geräts 2 und/oder zu dem dabei verwendeten Kommunikationsnetzwerk festgehalten werden. Die Vertrauenswürdigkeit des mindestens einen Einrichtungsschutz-Credentials EC wird während der Gültigkeitsdauer des eingerichteten Credentials C geprüft, z.B. bei Benutzung des eingerichteten Credentials EC oder periodisch wiederholt oder unregelmäßig wiederholt oder auf Anforderung.

Abhängig davon kann eine dem eingerichteten Credential C zugeordnete Vertrauensinformation, insbesondere eine Gültigkeitsinformation/Widerrufsinformation oder Berechtigungsinformation, angepasst werden. Dies kann durch das Gerät 2 erfolgen, auf dem das Credential C eingerichtet ist, oder auf einem Einrichtungs-Server bzw. Provisioning-Server 3 oder auf einem separaten Credential-Vertrauenswürdigkeitsmanagementsystem.

Die Information zum verwendeten Einrichtungsschutz-Credential EC kann bei einer möglichen Ausführungsform in einem nichtflüchtigen Speicher (Flash, SDCard), einer Datenbank, einem Verzeichnisdienst oder in einer verteilten Transaktionsdatenbank (Distributed Ledger, Blockchain) hinterlegt werden.

Weiterhin ist es möglich, dass in dem eingerichteten Credential C ein Attribut enthalten ist, das das zumindest bei dessen Einrichtung verwendeten Einrichtungsschutz-Credential EC explizit angibt, vorzugsweise als Referenz, insbesondere durch Angabe eines kryptographischen Hash-Wertes oder einer ID, z.B. einer Seriennummer des Einrichtungsschutz-Credentials EC.

Bei einer möglichen Ausführungsform kann dies transitiv auch auf weitere zurückliegende Einrichtungsvorgänge erweitert werden. Es kann also auch die Vertrauenswürdigkeit von Credentials C berücksichtigt werden, die zum Schutz des Einrichtens des Einrichtungsschutz-Credentials EC verwendet wurden.

Ein Einrichtungsschutz-Credential EC und das damit eingerichtete Credential C können bei einer möglichen Ausführungsform ein digitales Zertifikat (z.B. X.509), ein Authentisierungs-Token (z.B. OAuth2.0, JWT) oder ein verifizierbares Credential VC aufweisen

Ein Einrichtungsschutz-Credential EC kann ein Credential sein, mit dem das Gerät 2 sich authentisiert, oder ein Credential, mit dem das Gerät einen Provisioning-Server 3 oder einen Gerätemanagement-Server authentisiert, oder ein Credential, mittels dessen Hilfe das Gerät 2 die Integrität und Authentizität eines empfangenen Provisioning-Datensatzes prüft oder mit dem es diesen Provisioning-Datensatz entschlüsselt.

Bei einer möglichen Ausführungsform des erfindungsgemäßen Verfahrens wird überwacht, ob ein Einrichtungsschutz-Credential EC, das zu einem Einrichtungs-Zeitpunkt t0 beim Einrichten des Credentials C zum Einrichtungsschutz verwendet wurde, zu einem späteren Zeitpunkt tw als widerrufen bekanntgemacht wird. Wenn ein Einrichtungsschutz-Credential EC widerrufen wird, kann der angegebene Widerrufsgrund und Widerrufs-Bekanntmachungs-Zeitpunkt tw berücksichtigt werden. Weiterhin kann geprüft werden, ob ein angegebener Widerrufs-Ungültigkeitsbeginn-Zeitpunkt tb, ab dem das Einrichtungsschutz-Credential EC für ungültig erklärt wird, später liegt als der Einrichtungs-Zeitpunkt t0, an dem dieses Einrichtungsschutz-Credential EC zum Schutz des Einrichtens des eingerichteten Credentials C verwendet wurde.

Davon abhängig, d.h. unter Berücksichtigung des Widerrufsgrunds und/oder des Widerrufs-Bekanntmachungs-Zeitpunktes tw und/oder des Widerrufs-Ungültigkeitsbeginn-Zeitpunkt tb kann eine Reaktion R bestimmt werden, insbesondere das Sperren des Geräts 2 (z.B. in einem Gerätemanagementsystem oder einem Geräteverzeichnisdienst), auf dem das Credential C eingerichtet wurde, ein Sperren des eingerichteten Credentials C, ein Aktualisieren des eingerichteten Credentials C, ein Anpassen einer dem eingerichteten Credential C zugeordneten Berechtigung. Weiterhin kann eine Service-Aufgabe in einem Serviceaufgaben-Verwaltungssystem für einen Gerätetausch generiert werden.

Die Fig.1 zeigt ein industrielles Gerät 2, insbesondere ein IoT-Gerät, z.B. ein industrielles Steuergerät oder eine PLC (Programmable Logic Controller), mit einer Steuerungs-Funktion CF (Control) und einer Diagnose-Funktion DF (Diagnostics), die durch ein Betriebssystem (OS, Operating System) auf einer Prozessoreinheit (CPU) des Gerätes 2 ausgeführt werden. Weiterhin sind in dem Gerät 2 ein Datenspeicher (RAM, Flash), eine Ein-/Ausgabeeinheit (I/O) zum Verbinden von Sensoren und/oder Aktuatoren sowie mindestens eine Netzwerkschnittstelle (NWIF, Network Interface) vorgesehen. Die Netzwerkschnittstelle NWIF des Gerätes 2 kann drahtgebunden (z.B. Ethernet) oder drahtlos (z.B. Wi-Fi, Mobilfunk 6G, 5G, 4G, 3G) realisiert sein.

Das Gerät 2 ist über ein Netzwerk 5 mit einem Einrichtungsserver bzw. einem Provisioning-Server 3 und mit einem Widerrufsstatus-Server 4 verbunden. Nachdem die Authentifizierung des Einrichtungsserver 3 gegenüber dem Gerät 2 und ein Schlüsselaustausch abgeschlossen sind, übermittelt der Provisioning-Server 3 die notwendigen Credentials und Konfigurationsdaten an das Gerät 2. Die von dem Gerät 2 über das Netzwerk 5 von dem Einrichtungsserver 3 empfangenen Credentials C und Konfigurationsdaten können in einem sicheren Speicherbereich auf dem Gerät 2 abgelegt werden, um zu verhindern, dass sie manipuliert werden. Nach erfolgreichem Provisioning geht das Gerät 2 in den regulären Betriebsmodus über und beginnt mit der Kommunikation im Netzwerk, unter Verwendung der bereitgestellten Credentials C und Konfigurationsdaten.

Auf dem Gerät 2 sind Security-Funktionen SF realisiert, z.B. zur verschlüsselten Datenübertragung (z.B. IPsec, TLS, DTLS, QUIC, OPC UA SC) von Steuerdaten, Projektierungsdaten, Diagnosedaten, Geräteverwaltung. Dazu sind in einem Schlüsselspeicher KS (Key Store) des IoT-Geräts 2 mehrere Credentials C hinterlegt. Diese Credentials C umfassen beispielsweise kryptographische Schlüssel, digitale Zertifikate, Authentisierungs-Token oder Verifiable Credentials VC.

Ein verifizierbares Credential VC (engl. "verifiable credential") ist ein verifizierbarer Nachweis ,insbesondere eine kryptographisch geschützte, z.B. digital signierte Aussage, die z.B. eine Behörde (der Issuer) einem Subjekt (dem Holder) ausstellt. Ein Beispiel wäre ein digitaler Führerschein oder ein akademisches Zertifikat. Das Verifizierbare Credential VC enthält kryptografische Nachweise (z. B. digitale Signaturen), die es Dritten ermöglichen, die Echtheit und Integrität des Credentials VC zu prüfen. Eine Verifiable Presentation ist der Mechanismus, durch den der Holder das verifizierbare Credential VC präsentiert.

Die Credentials C werden über eine oder mehrere Provisioning-Funktionen PF eingerichtet, wie in Fig.1 schematisch dargestellt. Das Provisioning eines (weiteren) Credentials C kann dabei durch ein bereits vorliegendes Credential geschützt sein, das daher als Einrichtungsschutz-Credential EC bezeichnet werden kann. In einer Einrichtungs- (Provisioning)-Datenbank ProvDB, z.B. einer Provisioning-Log-Datei oder einer Key-Value-List, wird hinterlegt, welche Einrichtungsschutz-Credential(s) ECs bei dem Einrichten eines Credentials C verwendet wurden.

Bei der in Fig. 1 dargestellten Ausführungsform des Gerätes 2 ist eine Einheit 6A vorgesehen, welche überprüft, ob Einrichtungsschutz-Credentials ECs, die beim Einrichten von Credentials C verwendet wurden, zwischenzeitlich widerrufen wurden. Eine Einheit 6B, welche überprüft, ob Einrichtungsschutz-Credentials ECs, die beim Einrichten von Credentials C verwendet wurden, zwischenzeitlich widerrufen wurden, kann alternativ oder zusätzlich zu der Einheit 6A auch in dem Provisioning-Server 3 vorgesehen sein, wie in Fig.1 schematisch dargestellt ist. Ein Einrichtungsschutz-Credential EC, das beim Einrichten eines Credentials C verwendet wird, kann insbesondere den Einrichtungsvorgang selbst kryptographisch schützen, d.h. es wird zum Schutz des Einrichtens verwendet. Es kann insbesondere zur Authentisierung und zum Vertraulichkeitsschutz und zum kryptographischen Integritätsschutz einer Einrichten-Datenübertragung dienen.

Zu dem Einrichtungs-Zeitpunkt eines Credentials C wird bei einer möglichen Ausführungsform jeweils die Gültigkeit des dabei verwendeten Einrichtungsschutz-Credentials EC geprüft. Gemäß dem erfindungsgemäßen Verfahren werden auch zu späteren Zeitpunkten, für ein bereits eingerichtetes Credential C durch die Einheit 6A und/oder durch die Einheit 6B wiederholt geprüft, ob das beim Einrichten dieses Credentials C verwendete (und damals gültige) Einrichtungsschutz-Credential EC zwischenzeitlich widerrufen wurde. Abhängig von dem Prüfergebnis kann das eingerichtete Credential C widerrufen werden oder eine ihm zugeordnete Berechtigungsinformation angepasst werden. In dem in Fig.1 dargestellten Ausführungsbeispiel kann dies auf dem Gerät 2 selbst und/oder auf dem Einrichtungsserver-Server 3 umgesetzt werden. Dazu frägt die Einheit 6A des Gerätes 2 und/oder die Einheit 6B des Einrichtungs-Servers 3 bei einem Widerrufsstatus-Server 4 eine Widerrufsinformation (hier CRL oder OCSP) dahingehend an, ob ein verwendetes Einrichtungsschutz-Credential EC widerrufen wurde.

Falls sich zu einem späteren Zeitpunkt herausstellt, dass ein Einrichtungsschutz-Credential EC kompromittiert war, so kann ein Credential C widerrufen werden, dessen Einrichten (Provisioning, Onboarding) unter Verwendung dieses kompromittierten Einrichtungsschutz-Credentials ECs erfolgte. Wird ein Einrichtungsschutz-Credential EC, insbesondere ein Zertifikat, widerrufen, das zum Schutz des Einrichtens eines anderen Credentials C verwendet wurde, so führt dies bei dem erfindungsgemäßen System 1 dazu, dass auch das auf dem Gerät 2 damit eingerichtete Credential C automatisch widerrufen wird oder dass sich die dem eingerichteten Credential C zugeordneten Berechtigungen entsprechend ändern.

Fig.2 zeigt ein einfaches Ablaufdiagramm zur weiteren Erläuterung des erfindungsgemäßen Verfahrens. Das Verfahren weist bei einer möglichen Ausführungsform ein computerimplementiertes Verfahren auf, welches im Wesentlichen die Schritte S1, S2 des im Fig.2 dargestellten Ablaufdiagramm umfasst.

In einem Schritt S0 erfolgt zu einem Einrichtungszeitpunkt t0 in einem Einrichtungsvorgang das Einrichten eines Credentials C auf einem Gerät 2 des Systems 1. Dieser Einrichtungsvorgang wird durch ein Einrichtungsschutz-Credential EC geschützt.

In einem Schritt S1 erfolgt zu einem späteren Zeitpunkt t1 (Prüfzeitpunkt) noch während der Gültigkeitsdauer des im Schritt S0 eingerichteten Credentials C eine Prüfung, ob das bei dem Einrichtungsvorgang verwendete Einrichtungsschutz-Credential EC noch gültig ist.

Das Prüfen der Gültigkeit des zu einem Credential C zugehörigen Einrichtungsschutz-Credentials EC im Schritt S1 kann bei der Benutzung des eingerichteten Credentials C erfolgen. Das Prüfen der Gültigkeit des zu einem Credential C zugehörigen Einrichtungsschutz-Credentials EC im Schritt S1 erfolgt bei einer weiteren möglichen Ausführungsform periodisch während der Gültigkeitsdauer des jeweiligen Credentials C. Bei einer alternativen Ausführungsform erfolgt das Prüfen der Gültigkeit des zu einem Credential C zugehörigen Einrichtungsschutz-Credentials EC auf eine von dem Gerät 2 erhaltene Prüf-Anforderung hin.

Falls das verwendete Einrichtungsschutz-Credential EC im Schritt S1 als nicht gültig oder als widerrufen erkannt wird, erfolgt im Schritt S2 eine geeignete Reaktion R hierauf, insbesondere das Sperren des Geräts 2 auf dem das Credential C eingerichtet wurde, ein Sperren des eingerichteten Credentials C, ein Aktualisieren des eingerichteten Credentials C oder ein Anpassen einer dem eingerichteten Credential C zugeordneten Berechtigung.

Die Reaktion R im Schritt S2 hängt bei einer möglichen Ausführungsform davon ab, wie kritisch die von dem eingerichteten Credential C geschützte Sicherheitsfunktion SF des Gerätes 2 ist. Weiterhin hängt die Reaktion R einer möglichen Ausführungsform von dem Widerrufs-Bekanntmachungs-Zeitpunkt tw und dem Widerrufsgrund WG ab.

$$R = f(SF, WG, tw)$$

Weiterhin kann die Reaktion R bei einer möglichen Ausführungsform von dem Widerrufs-Ungültigkeitsbeginn-Zeitpunkt tb und dem Widerrufsgrund WG abhängen:

$$R = f(SF, WG, tb)$$

Weitere Informationen können ebenfalls bei der Bestimmung der geeigneten Reaktion R berücksichtigt werden, beispielsweise das betroffene Gerät 2 oder dessen Aufstellungsort.

Der Widerrufs-Bekanntmachungszeitpunkt tw liegt nach dem Einrichtungszeitpunkt t0 und vor dem Prüfzeitpunkt t1 (t0 < tw <t1). Je weiter der Widerrufszeitpunkt tw vor dem Prüfzeitpunkt t1 liegt und je gravierender der angegebene Widerrufsgrund ist, desto umfassender fällt die im Schritt S2 durchgeführte Reaktion aus.

Der Widerrufs-Ungültigkeitsbeginn-Zeitpunkt tb kann in manchen Fällen vor dem Widerrufs-Bekanntmachungszeitpunkt tw liegen (tb < tw). Die im Schritt S2 durchgeführte Reaktion R kann davon abhängen, ob der Widerrufs-Ungültigkeitsbeginn-Zeitpunkt tb vor dem Einrichtungszeitpunkt t0 oder nach dem Einrichtungszeitpunkt t0 liegt. Weiterhin kann die Maßnahme abhängig davon erfolgen, wie weit der Widerrufs-Ungültigkeitsbeginn-Zeitpunkt tb und der Einrichtungszeitpunkt t0 auseinanderliegen.

Der Widerrufs-Ungültigkeitsbeginn-Zeitpunkt tb kann in manchen Fällen jedoch auch nach dem Widerrufs-Bekanntmachungszeitpunkt tw liegen (tb > tw). Dadurch kann beispielsweise bekanntgemacht werden, dass Credentials C, bei deren Einrichten das in der Widerrufsinformation angegebene Einrichtungscredential EC verwendet wurde, noch bis zu dem Widerrufs-Ungültigkeitsbeginn-Zeitpunkt tb weiterverwendet werden dürfen, d.h. bis dahin gültig bleiben.

Wird ein Credential C hinsichtlich der Gültigkeit seines zugehörigen Einrichtungsschutz-Credentials EC periodisch in regelmäßigen Zeitabständen oder unregelmäßig wiederholt geprüft, so kann der Zeitabstand zwischen Prüfungen davon abhängen, wie kritisch die von dem eingerichteten Credential C geschützte Sicherheitsfunktion SF des Gerätes 2 ist. Je kritischer die Sicherheitsfunktion SF ist, desto geringer wird der Zeitabstand eingestellt.

Bei einer möglichen Ausführungsform des erfindungsgemäßen Verfahrens kann der Widerruf eines Einrichtungsschutz-Credentials EC auch über eine Nutzerschnittstelle des Systems 1 einem Nutzer angezeigt werden. Hierbei können auch der Widerrufs-Ungültigkeitsbeginn-Zeitpunkt tb und/oder der Bekanntmachungszeitpunkt tw und der Widerrufsgrund WG angegeben werden. Ferner können die davon betroffenen Sicherheitsfunktionen SF des Gerätes 2 angezeigt werden. Darüber hinaus können Vorschläge für geeignete Reaktionen R bzw. Gegenmaßnahmen angezeigt werden, von denen der Nutzer eine auswählen bzw. selektieren kann.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar.

**Patentansprüche**

1. Verfahren zum Verifizieren der Gültigkeit von Credentials, die unter Verwendung eines Einrichtungsschutz-Credentials (EC) in einem Einrichtungsvorgang (S0) auf einem Gerät (2) eingerichtet sind, wobei während der Gültigkeitsdauer des jeweiligen Creditials (C) geprüft wird (S1), ob das bei dem Einrichtungsvorgang des jeweiligen Credentials (C) zu dessen Schutz verwendete zugehörige Einrichtungsschutz-Credential (EC) noch gültig ist.

2. Verfahren nach Anspruch 1, wobei bei dem Einrichtungsvorgang (S0) zum Einrichten eines Credentials (C) eine Information hinsichtlich des dabei verwendeten Einrichtungsschutz-Credentials in einer Einrichtungsdatenbank (ProvDB) des Gerätes (2) oder eines Einrichtungsservers (3) gespeichert wird und/oder in dem auf dem Gerät (2) eingerichteten Credential (C) als Attribut des eingerichteten Credentials (C) gespeichert wird.

3. Verfahren nach einem der vorhergehenden Ansprüche, wobei bei dem Einrichtungsvorgang (S0) zum Einrichten eines Credentials auf dem Gerät (2) weitere Informationen hinsichtlich eines Einrichtungs-Zeitpunktes des Einrichtungsvorganges, des Ortes des Gerätes (2) und/oder des dabei verwendeten Kommunikationsnetzwerkes gespeichert werden.

4. Verfahren nach einem der vorhergehenden Ansprüche, wobei überwacht wird, ob das bei einem Einrichtungsvorgang (S0) zum Einrichten eines Credentials (C) auf dem Gerät (2) verwendete zugehörige Einrichtungsschutz-Credential (EC) durch einen Widerruf hinsichtlich des betreffenden Einrichtungs-Credentials für ungültig erklärt worden ist.

5. Verfahren nach Anspruch 4, wobei das Gerät (2) und/oder ein Einrichtungsserver (3) Widerrufsinformation bei einem Widerrufs-Statusserver (4) dahingehend abfragt, ob das bei einem Einrichtungsvorgang (S0) zum Einrichten eines Credentials (C) auf dem Gerät (2) verwendete zugehörige Einrichtungsschutz-Credential (EC) für ungültig erklärt worden ist.

6. Verfahren nach Anspruch 5, wobei die bei dem Widerrufs-Statusserver (4) abgefragten Widerrufsinformationen hinsichtlich des Einrichtungsschutz-Credentials (EC) einen Widerrufszeitpunkt und/oder einen Widerrufsgrund umfassen.

7. Verfahren nach Anspruch 6, wobei geprüft wird, ob der in den Widerrufsinformationen hinsichtlich des Einrichtungsschutz-Credentials (EC) angegebene Widerrufs-Zeitpunkt zeitlich hinter dem Einrichtungs-Zeitpunkt des betreffenden Einrichtungsschutz-Credentials (EC) liegt.

8. Verfahren nach einem der Ansprüche 6 oder 7, wobei in Abhängigkeit des in den Widerrufsinformationen des Einrichtungsschutz-Credentials (EC) angegebenen Widerrufsgrundes und/oder des in den Widerrufsinformationen des Einrichtungsschutz-Credentials (EC) angegebenen Widerrufs-Zeitpunktes eine dafür vorgesehene Reaktion zur Behandlung des Widerrufes erfolgt (S2).

9. Verfahren nach Anspruch 8, wobei die Reaktion zur Behandlung des Widerrufes darin besteht, dass dasjenige Gerät (2), welches das unter Verwendung des in dem erhaltenen Widerruf für ungültig erklärten Einrichtungsschutz-Credentials (EC) eingerichtete Credential (C) aufweist, automatisch gesperrt wird.

10. Verfahren nach Anspruch 8, wobei die Reaktion zur Behandlung des Widerrufes darin besteht, dass das unter Verwendung des in dem erhaltenen Widerruf für ungültig erklärten Einrichtungsschutz-Credentials (EC) eingerichtete Credential aktualisiert, gesperrt oder eine zu dem eingerichteten Credential (C) zugeordnete Berechtigung aktualisiert wird.

11. Verfahren nach Anspruch 8, wobei die Reaktion zur Behandlung des Widerrufes darin besteht, dass für das unter Verwendung des in dem erhaltenen Widerruf für ungültig erklärten Einrichtungs-Credentials (EC) eingerichtete Credential (C) eine Service-Aufgabe für einen Geräteaustausch generiert wird.

12. Verfahren nach einem der vorhergehenden Ansprüche, wobei das Prüfen (S1) der Gültigkeit des zu einem Credential (C) zugehörigen Einrichtungsschutz-Credentials (EC) bei Benutzung des eingerichteten Credentials (C) erfolgt.

13. Verfahren nach einem der vorhergehenden Ansprüche, wobei das Prüfen (S1) der Gültigkeit des zu einem Credential(C) zugehörigen Einrichtungsschutz-Credentials (EC) periodisch wiederholt während der Gültigkeitsdauer des jeweiligen Creditials (C) erfolgt.

14. Verfahren nach einem der vorhergehenden Ansprüche, wobei das Prüfen (S1) der Gültigkeit des zu einem Credential (C) zugehörigen Einrichtungsschutz-Credentials (EC) auf eine von dem Gerät (2) erhaltene Prüf-Anforderung hin erfolgt.

15. Verfahren nach einem der vorhergehenden Ansprüche, wobei das auf dem Gerät (2) eingerichtete Credential (C) und das zugehörige Einrichtungsschutz-Credential (EC) ein digitales Zertifikat, ein Authentisierungs-Token, einen kryptographischen Schlüssel oder ein verifizierbares Credential aufweist.

16. Verfahren nach einem der vorhergehenden Ansprüche, wobei das bei dem Einrichtungsvorgang zum Einrichten eines Credentials(C) auf dem Gerät (2) das zu dessen Schutz verwendete Einrichtungsschutz-Credential (EC) zumindest eines der folgenden aufweist:

    - ein Credential, mit dem das Gerät (2) sich authentisiert;
    - ein Credential, mit dem das Gerät (2) einen Einrichtungs-Server (3) oder einen Gerätemanagement-Server authentisiert;
    - ein Credential, mit dem das Gerät (2) die Integrität und Authentizität eines von dem Gerät (2) empfangenen Einrichtungs-Datensatzes prüft; oder
    - ein Credential, mit dem das Gerät (2) den von dem Gerät (2) empfangenen Einrichtungs-Datensatzes entschlüsselt.

17. System (1) zum Verifizieren der Gültigkeit von Credentials, die unter Verwendung eines Einrichtungsschutz-Credentials (EC) in einem Einrichtungsvorgang auf einem Gerät (2) des Systems(1) eingerichtet sind, wobei durch eine Einheit (6A) des Gerätes (2) und/oder durch eine Einheit (6B) eines Einrichtungsservers (3) des Systems (1) während der Gültigkeitsdauer des jeweiligen Credentials (C) geprüft wird, ob das bei dem Einrichtungsvorgang des jeweiligen Credentials (C) zu dessen Schutz verwendete zugehörige Einrichtungsschutz-Credential (EC) noch gültig ist.

18. System nach Anspruch 17, wobei das Gerät (2) ein industrielles IoT-Gerät ist, das einen Speicher (KS) zur Speicherung von Credentials (C) für Sicherheitsfunktionen des Gerätes (2) aufweist.

19. System nach einem der vorherigen System-bezogenen Ansprüche, wobei das Gerät (2) eine drahtlose oder drahtgebundene Netzwerkschnittstelle (NWIF) zur Anbindung des Gerätes (2) an einen Einrichtungsserver (3) und/oder an einen Widerrufs-Statusserver (4) über ein Kommunikationsnetzwerk (5) des Systems (1) aufweist.

20. System nach einem der vorherigen System-bezogenen Ansprüche, wobei das Gerät (2) und/oder der Einrichtungsserver (3) eine Einheit (6A;6B) aufweist, die zur Ausführung eines Verfahrens nach einem der Ansprüche 1 bis 16 ausgelegt ist.

FIG 1

FIG 2

Europäisches
Patentamt

European
Patent Office

Office européen
des brevets

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2009/132813 A1 (SCHIBUK NORMAN [US]) 21. Mai 2009 (2009-05-21) | 1,2,4,5, 12-15, 17,19,20 | INV. H04L9/40 H04L9/32 |
| A | * Absatz [0154] - Absatz [0177] * | 3,6-11, 16,18 | |
| | ----- | | |
| A | EP 4 199 414 A1 (SIEMENS AG [DE]) 21. Juni 2023 (2023-06-21) * Absatz [0001] - Absatz [0010] * ----- | 1-20 | |

RECHERCHIERTE
SACHGEBIETE (IPC)

H04L

Der vorliegende Recherchenbericht wurde für alle Patentansprüche erstellt

| Recherchenort | Abschlußdatum der Recherche | Prüfer |
|---|---|---|
| Den Haag | 13. März 2025 | Ströbeck, Anders |

EPO FORM 1503 03.82 (P04C03)

EP 4 727 062 A1

**ANHANG ZUM EUROPÄISCHEN RECHERCHENBERICHT
ÜBER DIE EUROPÄISCHE PATENTANMELDUNG NR.**  EP 24 20 6154

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-03-2025

| Im Recherchenbericht angeführtes Patentdokument | Datum der Veröffentlichung | Mitglied(er) der Patentfamilie | Datum der Veröffentlichung |
|---|---|---|---|
| US 2009132813 A1 | 21-05-2009 | US 2009132813 A1<br>US 2013061055 A1<br>WO 2009070430 A2 | 21-05-2009<br>07-03-2013<br>04-06-2009 |
| EP 4199414 A1 | 21-06-2023 | KEINE | |

Für nähere Einzelheiten zu diesem Anhang : siehe Amtsblatt des Europäischen Patentamts, Nr.12/82